(19) Europäisches Patentamt
European Patent Office
Office européen des brevets

(11) **EP 2 098 737 A2**

(12) **EUROPÄISCHE PATENTANMELDUNG**

(43) Veröffentlichungstag:
**09.09.2009 Patentblatt 2009/37**

(51) Int Cl.:
*F16B 25/00* *(2006.01)*          *F16B 35/04* *(2006.01)*

(21) Anmeldenummer: **09153059.2**

(22) Anmeldetag: **18.02.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **06.03.2008 DE 102008000550**

(71) Anmelder: **HILTI Aktiengesellschaft**
**9494 Schaan (LI)**

(72) Erfinder:
• **Thau, Sebastian**
  **6800, Feldkirch (AT)**
• **Hertlein, Peter**
  **9491, Ruggell (LI)**
• **Matthiesen, Sven**
  **88131, Lindau (DE)**
• **Kieber, Markus**
  **9487, Gamprin (LI)**
• **Kistler, Thomas**
  **9016, St. Gallen (CH)**

(54) **Schraube**

(57)    Gegenstand der vorliegenden Erfindung ist eine gewindeformende Schraube (10) mit einem wenigstens bereichsweise ein Gewinde (15) tragenden und eine Achse (A) definierenden Schaft (11) an dessen einem Ende eine Spitze (13) und an dessen gegenüberliegenden anderen Ende ein Kopf (14) angeordnet ist. Zwischen dem Kopf (14) und dem Schaft (11) ist ein Übergangsabschnitt (12) angeordnet, wobei der Schaft (11) einen Schaftradius (Rs) und der Kopf einen minimalen Kopfradius (Rk) aufweist. Der Übergangsabschnitt (12) zwischen Kopf (14) und Schaft (11) weist umfänglich drei bis zehn in axialer Richtung einander nachfolgende Kegelstümpfe (21, 22, 23) auf, deren Mantellinien unterschiedliche Neigungswinkel ([alpha], [beta], [gamma]) zur Achse (A) aufweisen, die vom Kopf (14) in Richtung zur Spitze (13) hin kleiner werden, wobei ein erster Neigungswinkel ([alpha]), der Mantellinie des dem Kopf (14) am nächsten liegenden ersten Kegelstumpfs (21), zwischen 40° und 50° beträgt.

**Beschreibung**

Die vorliegende Erfindung betrifft eine Schraube der im Oberbegriff von Patentanspruch 1 genannten Art. Derartige Schrauben sind z. B. als gewindeformende Schrauben ausgebildet und werden z. B. zur Verschraubung von Metallblechen genutzt.

Derartige Schrauben weisen häufig einen Kopf mit einem Durchmesser auf, der deutlich grösser ist, als der Durchmesser des Schaftes. Dieses ist z. B. bei Schrauben der Fall, die umfänglich am Kopf eine Mehrkantgeometrie zur Drehmitnahme durch einen Schraubenschlüssel oder eine Nuss aufweisen. Mit dem grossen Sprung im Durchmesser zwischen Kopf und Schaft verbunden sind grosse Belastungen durch Kraftumlenkung beim Einschrauben einer derartigen Schraube, die eine sehr grosse Kerbwirkung am Übergang zwischen Schaft und Kopf zur Folge haben. So besteht bei derartigen Schrauben eine erhöhte Gefahr eines Abbruches des Kopfes vom Schaft.

Aus der US 3 661 046 ist eine gattungsgemässe Schraube mit einem Kopf mit umfänglicher Sechskantgeometrie als Drehmitnahmemittel und einem sich daran anschliessenden Schaft bekannt, bei der umfänglich am Schaft ein Gewinde angeordnet ist. Im Übergang vom Kopf zum Schaft ist eine kurze, sich vom Schaft zum Kopf hin trompetenförmig nach radial aussen hin erweiternde Zone angeordnet, deren grösster Aussendurchmesser den Schaftdurchmesser in dem dem Kopf nahen Bereich jedoch nur wenig übersteigt, während der Aussendurchmesser des Kopfes deutlich grösser ist als der Schaftdurchmesser.

Von Nachteil dabei ist, dass mit dem grossen Sprung im Durchmesser zwischen Kopf und Schaft grosse Belastungen durch Kraftumlenkung beim Einschrauben einer derartigen Schraube verbunden sind, die eine sehr grosse Kerbwirkung am Übergang zwischen Schaft und Kopf zur Folge haben. So besteht bei derartigen Schrauben die Gefahr eines Abbruchs des Kopfes vom Schaft.

Die Aufgabe der vorliegenden Erfindung liegt darin, die oben genannten Nachteile zu vermeiden und eine Schraube bereitzustellen, die auch bei einem Schraubenkopf mit umfänglich angeordneten Drehmitnahmemitteln eine hohe Resistenz gegen ein Abbrechen des Kopfes vom Schaft aufweisen.

Diese Aufgabe wird erfindungsgemäss durch die in Patentanspruch 1 genannten Massnahmen gelöst. Demnach weist der Übergangsabschnitt zwischen Kopf und Schaft umfänglich drei bis zehn in axialer Richtung einander nachfolgende Kegelstümpfe auf, deren Mantellinien unterschiedliche Neigungswinkel zur Achse aufweisen und die vom Kopf in Richtung zur Spitze hin kleiner werden, wobei ein erster Neigungswinkel der Mantellinie des dem Kopf am nächsten liegenden ersten Kegelstumpfs zwischen 40° und 50° beträgt. Hierdurch werden die Kerbspannungen zwischen Kopf und Schaft deutlich reduziert und somit eine hohe Resistenz der Schraube gegen ein Abbrechen des Kopfes vom Schaft erzielt. Vorzugsweise beträgt der erste Neigungswinkel dabei 45°.

Vorteilhaft beträgt der Neigungswinkel der Mantellinie eines sich an einen Kegelstumpf in axialer Richtung zur Spitze hin anschliessenden weiteren Kegelstumpfs jeweils das n-fache des Neigungswinkels der Mantellinie des diesem zum Kopf hin benachbarten Kegelstumpfs, wobei n eine Zahl zwischen 0,45 bis 0,55 ist. Besonders vorteilhaft ist es dabei wenn n gleich 0,5 ist. Durch diese Massnahme wird eine weitere Optimierung der Resistenz gegen Kerbspannungen erzielt.

Von Vorteil ist es dabei ferner, wenn der erste Kegelstumpf an seinem dem Kopf zugewandten Ende eine maximale erste radiale Breite gegenüber dem Schaft aufweist, die kleiner/gleich der Differenz aus minimalen Kopfradius und Schaftradius entsprechend der Gleichung **erste radiale Breite ≤ Kopfradius - Schaftradius** ist, wodurch eine gute Reduzierung der Kerbwirkung erzielt wird.

Günstig ist es weiterhin, wenn die erste radiale Breite des ersten Kegelstumpfs 40 % bis 80 % der Differenz aus minimalen Kopfradius und Schaftradius entspricht, so dass eine gewisse Restunterkopffläche bestehen bleibt, die sowohl die Schraube auf dem Blech abbremst, um die Rutschkupplung eine Schraubgerätes zu aktivieren, als auch ein Durchziehen der Schraube durch das oder die Bleche zu verhindern.

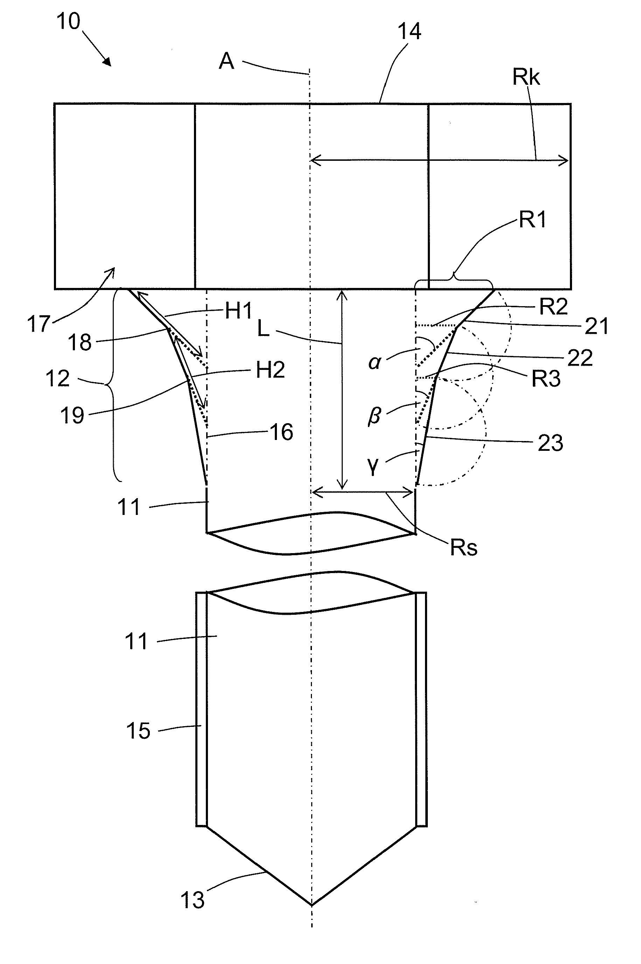

In der Zeichnung ist die Erfindung in einem Ausführungsbeispiel dargestellt.

Die in der Figur dargestellte erfindungsgemässe gewindeformende Schraube 10 weist einen ein Gewinde 15 tragenden Schaft 11 auf, an dessen einem Ende eine Spitze 13 und an dessen gegenüberliegenden anderen Ende ein Kopf 14 angeordnet ist. Eine Achse A definiert dabei eine axiale Richtung der Schraube 10. Der Kopf 14 weist ein Drehmitnahmemittel 17 für ein Schraubwerkzeug auf, der als Aussen-Mehrkant und insbesondere als Aussen-Sechskant ausgebildet ist an den ein Schraubenschlüssel angesetzt werden kann.

Zwischen dem Kopf 14 und dem Schaft 11 ist ein Übergangsabschnitt 12 angeordnet der gegenüber dem Schaft 11 mit einer Geometrie verstärkt ist, die umfänglich drei in axialer Richtung einander nachfolgende Kegelstümpfe 21, 22, 23 ausbildet.

Eine Mantellinie eines dem Kopf 14 am nächsten liegenden ersten Kegelstumpfs 21 weist zu der Achse A einen Neigungswinkel [alpha] zwischen 40° und 50° und vorzugsweise von 45° auf (aus Gründen der Übersichtlichkeit ist in der Figur der Neigungswinkel [alpha] zur Projektion 16 des Schaftes 11 eingezeichnet, die parallel zu der Achse A verläuft). Die Mantellinie ist dabei eine auf der Kegelmantelfläche eines Kegelstumpfs (21, 22, 23) in axialer Richtung verlaufende Linie. Die Neigungswinkel [beta], [gamma] der Mantellinien der dem ersten Kegelstumpf 21 in axialer Richtung zur Spitze hin nachfolgenden Kegelstümpfe 22, 23 nehmen zur Spitze 13 hin gestuft ab. Der jeweils der Spitze 13 nähere Kegelstumpf 22, 23 weist dabei einen Neigungswinkel [beta], [gamma] der Mantellinie auf, der das n-fache des Neigungswinkels [alpha], [beta] der Mantellinie des diesem Kegelstumpf 22, 23 zum Kopf hin benachbarten Kegelstumpfs 21, 22 beträgt, wobei n eine Zahl zwischen 0,45 bis 0,55 ist. Im dargestellten Ausführungsbeispiel ist der Neigungswinkel [beta] der Mantellinie des zweiten Kegelstumpfs 22 zur Achse A bzw. zur Projektion 16 das 0,5-fache des Neigungswinkels [alpha] der Mantellinie des ersten Kegelstumpfs 21. Der Neigungswinkel [beta] beträgt somit zwischen 20° und 25° und vorzugsweise 22,5°. Der Neigungswinkel [gamma] der Mantellinie des dritten Kegelstumpfs 23 zur Achse A bzw. zur Projektion 16 ist das 0,5-fache des Neigungswinkels [beta] der Mantellinie des zweiten Kegelstumpfs 22 bzw. das 0,25-fache des Neigungswinkels [alpha] der Mantellinie des ersten Kegelstumpfs 21. Der Neigungswinkel [gamma] beträgt somit zwischen 10° und 12,5° und vorzugsweise 11,25°. Die Neigungswinkel [alpha], [beta], [gamma] werden also vom kopfnahen Bereich in Richtung auf die Spitze 13 hin (in Stufen) kleiner.

Der erste Kegelstumpf 21 weist an seinem dem Kopf 14 zugewandten Ende eine maximale erste radiale Breite R1 (ausgehend von der Projektion 16 des Schafts 11) auf, die kleiner oder gleich der Differenz aus dem minimalen Kopfradius Rk (also dem Kopfradius zwischen der Längsachse der Schraube und einer dieser Längsachse am nächsten gelegenen Aussenfläche des Kopfs) und des Schaftradius Rs entsprechend der Gleichung

$$\text{erster radiale Breite R1} \leq \text{Kopfradius Rk} - \text{Schaftradius Rs}$$

ist. Die erste radiale Breite R1 des ersten Kegelstumpfs 21 entspricht dabei 40 % bis 80 % (bzw. dem 0,4 bis 0,8-fachen) der Differenz aus minimalen Kopfradius Rk und Schaftradius Rs. Eine maximale zweite radiale Breite R2 des zweiten Kegelstumpfs 22 (im Übergang zum ersten Kegelstumpf 21) entspricht dabei ferner dem 0,4 bis 0,8-fachen, vorzugsweise dem 0,5-fachen der ersten radialen Breite R1. Eine maximale dritte radiale Breite R3 des dritten Kegelstumpfs 23 (im Übergang zum ersten Kegelstumpf 21) entspricht dem 0,45 bis 0,55-fachen, vorzugsweise dem 0,5-fachen der zweiten radialen Breite R2.

Der zweite Kegelstumpf 22 ist so zum ersten Kegelstumpf 21 angeordnet, dass er an einer Stelle 18 von diesem abzweigt, die auf der Hälfte einer interpolierten Länge H1 der Mantelfläche des ersten Kegelstumpfs 21 zur Projektion 16 des Schafts 11 liegt. Der dritte Kegelstumpf 23 ist ebenfalls so zum zweiten Kegelstumpf 22 angeordnet, dass er an einer Stelle 19 von diesem abzweigt, die auf der Hälfte einer interpolierten Länge H2 der Mantelfläche des zweiten Kegelstumpfs 22 zur Projektion 16 des Schafts 11 liegt.

Axial erstreckt sich der von den Kegelstümpfen 21, 22, 23 eingenommene Übergangsabschnitt 12 über eine Länge L. Die Länge L kann für ideale Neigungswinkel mit einem Neigungswinkel [alpha] der Mantellinie des ersten Kegelstumpfs 21 von 45° nach der Formel:

$$L = R1 * X$$

berechnet werden. Dabei ist X eine veränderliche Konstante die von der Anzahl der Kegelstümpfe abhängt und nachfolgend aufgeführte Werte aufweisen kann:

X=1 für einen Kolbenstumpf, X= 1.70711 für zwei Kolbenstümpfe, X= 2.36039 für drei Kolbenstümpfe, X= 3.00112 für vier Kolbenstümpfe, X= 3.63876 für fünf Kolbenstümpfe, X= 4.27564 für sechs Kolbenstümpfe, X= 4.91232 für sieben Kolbenstümpfe, X= 5.54896 für acht Kolbenstümpfe, X= 6.18558 für neun Kolbenstümpfe und X= 6.82220 für zehn Kolbenstümpfe.

Zur Reibungsverminderung kann die Schraube wenigstens im Bereich des Gewindes 15 und/oder der Spitze 13 noch mit einer reibungsmindernden Beschichtung, wie z. B. einem organischen (z. B. Wachs oder Schneidöl) oder einem anorganischen Schmiermittel (z. B. Zink), ausgerüstet sein.

**Patentansprüche**

1.    Schraube (10) mit einem wenigstens bereichsweise ein Gewinde (15) tragenden und eine Achse (A) definierenden Schaft (11) an dessen einem Ende eine Spitze (13) und an dessen gegenüberliegenden anderen Ende ein Kopf (14) angeordnet ist, und mit einem Übergangsabschnitt (12) zwischen dem Kopfes (14) und dem Schaft (11), wobei der Schaft (11) einen Schaftradius (Rs) und der Kopf einen minimalen Kopfradius (Rk) aufweist,

**dadurch gekennzeichnet,**
**dass** der Übergangsabschnitt (12) zwischen Kopf (14) und Schaft (11) umfänglich drei bis zehn in axialer Richtung einander nachfolgende Kegelstümpfen (21, 22, 23) aufweist, deren Mantellinien unterschiedliche Neigungswinkel ([alpha], [beta], [gamma]) zur Achse (A) aufweisen, die vom Kopf (14) in Richtung zur Spitze (13) hin kleiner werden, wobei ein erster Neigungswinkel ([alpha]), der Mantellinie des dem Kopf (14) am nächsten liegenden ersten Kegelstumpfs (21), zwischen 40° und 50° beträgt.

2. Schraube nach Anspruch 1, **dadurch gekennzeichnet, dass** der Neigungswinkel ([beta], [gamma]) der Mantellinie eines sich an einen Kegelstumpf (21, 22) in axialer Richtung zur Spitze hin anschliessenden Kegelstumpfs (22, 23) jeweils das n-fache des Neigungswinkels ([alpha], [beta]) der Mantellinie des diesem zum Kopf hin benachbarten Kegelstumpfs (21, 22) beträgt, wobei n eine Zahl zwischen 0,45 und 0,55 ist.

3. Schraube nach Anspruch 2, **dadurch gekennzeichnet, dass** n gleich 0,5 ist.

4. Schraube nach einem der Ansprüche 1 bis 3, **dadurch gekennzeichnet, dass** der erste Kegelstumpf (21) an seinem dem Kopf (14) zugewandten Ende eine maximale erste radiale Breite (R1) gegenüber dem Schaft (11) aufweist, die kleiner/gleich der Differenz aus minimalen Kopfradius (Rk) und Schaftradius (Rs) entsprechend der Gleichung erste radiale Breite (R1) ≤ Kopfradius (Rk) - Schaftradius (Rs) ist.

5. Schraube nach einem der Ansprüche 1 bis 4, **dadurch gekennzeichnet, dass** die erste radiale Breite (R1) des ersten Kegelstumpfs (21) 40 % bis 80 % der Differenz aus minimalen Kopfradius (Rk) und Schaftradius (Rs) entspricht.

**IN DER BESCHREIBUNG AUFGEFÜHRTE DOKUMENTE**

**In der Beschreibung aufgeführte Patentdokumente**

- US 3661046 A